# EUROPEAN PATENT SPECIFICATION

(11) **EP 1 995 577 B1**
(45) Date of publication and mention of the grant of the patent: **22.06.2011**
(21) Application number: 08251783.0
(22) Date of filing: 22.05.2008
(51) Int. Cl.: G01K 1/02, G01K 7/02, G01K 7/04, F01D 17/08

(54) **Temperature sensing**
Temperaturmessung
Capteur de température

(30) Priority: 22.05.2007 GB 0709723
(43) Date of publication of application: 26.11.2008
(73) Proprietor: Goodrich Control Systems Ltd, Solihull, West Midlands B90 4LA (GB)
(72) Inventor: Shrimpling, Peter, Kingstanding Birmingham B44 8JX (GB); Brookes, David Frederick, Northfield Birmingham B31 5HL (GB)
(74) Representative: Bailey, Richard Alan

(56) References cited:
- GB-A- 2 226 366
- US-A- 5 106 203
- US-A1- 2004 114 666

## Description

This invention relates to temperature sensing and in particular to the sensing of the turbine gas temperature (TGT), for example, of a gas turbine engine for use in aerospace applications.

Typically, the error margin on a TGT measurement system is of the order of ±50°C (conservative typical). It is desirable to operate engines with relatively high turbine inlet temperatures as thermal efficiency and power to weight ratio benefits can be achieved. Consequently, engine emissions and fuel burn can be reduced. Although engine operation at high turbine inlet temperatures is desirable, it is important to ensure that the temperature does not exceed the thermal stress limits of the turbine blades or other limiting components of the engine. Furthermore, it is important that a clearance between the turbine blades and a turbine casing, commonly known as tip clearance, is maintained at these high temperatures. Where the TGT measurement system has a large error margin as mentioned above, the engine will normally be operating at a turbine inlet temperature lower than is desirable in order to ensure that the maximum possible temperature, allowing for the error margin, does not exceed the above mentioned thermal stress limit or result in the tip clearance no longer being maintained.

It will be appreciated that by improving the accuracy with which a TGT measurement system operates, and thus reducing the size of the error margin, normal engine operation can occur with increased turbine inlet temperatures, thus the benefits outlined above can be achieved.

Typically, a TGT measurement system comprises a plurality of temperature sensors in the form of thermocouples spaced apart around the low pressure turbine guide vanes. The temperature sensors are connected together in parallel in a ladder-like fashion, and an average of the outputs of the sensors is used by the associated engine controller in controlling the operation of the engine. It will be appreciated that, in such an arrangement, if one of the sensors were to fail, this would impact upon the average output value, and so result in the engine operating at a below optimum setting. Furthermore, it is recognised that the error in a TGT measurement system is due not only to sensor error, but also to error contributions from associated cable connections, commonly known as, and herein referred to as, harnesses, and the engine controller electronics. Hence, the error margin in such an arrangement is cumulative, giving rise to the large overall error margin.

It is desirable to be able to reduce the error margin by at least an order of magnitude, for example to around ±5°C.

A number of arrangements are known in which data storage devices are associated with an aircraft engine to allow the control or monitoring thereof to be undertaken using information related to the operating characteristics of the engine or components associated therewith. For example, US5033010 describes an arrangement in which a data storage device associated with the engine stores data representative of the operational history of the engine, for example the number of engine starts, cumulated running hours and any occasions where the engine operating temperature has fallen outside of a predetermined operating range. By storage of such information on a data storage device associated with the engine, replacement of the engine control unit or removal and subsequent reinstallation of the engine will not result in a loss of data integrity. US6532434 describes an arrangement in which a data storage device is provided in which data representative of the outputs of one or more sensors can be stored for subsequent analysis US7204076 describes an arrangement in which a data storage device is associated with a fuel metering unit for use in storing calibration data representative of the operation thereof. The calibration data is used by an associated control unit in the control of the operation of the fuel metering unit.

US2004/0114666 and US5106203 describe temperature sensing arrangements for use in sensing gas temperatures. The arrangements make use of thermocouples to sense the gas temperatures.

It is an object of the invention to provide a TGT measurement system of improved accuracy.

According to the present invention there is provided a turbine gas measurement system comprising a plurality of thermocouples connected in parallel, each being connected by an associated harness, and characterised by a distributed electronic node to which each of the thermocouples is connected by the respective harness, and at least one data storage device located within the node, wherein the harnesses are all of substantially the same length, and wherein calibration data relating to the output response of each of the plurality thermocouples and variations in the associated harness resistance with temperature changes is carried by the data storage device.

In such an arrangement, calibration thereof can be undertaken prior to use and the calibration data stored in the data storage device and used during the subsequent use of the measurement system. Consequently, rather than having to allow for or accommodate the large possible error margin in the TGT measurement system, the data used in controlling engine operation includes only a much reduced possible error margin. The improved measurement accuracy so achieved can be used to allow engine operation closer to the desired higher turbine inlet temperatures.

The calibration data may relate to the voltage output response of the associated thermocouple to temperature changes, and, or a measured error in this voltage output response from an ideal theoretical value. It may further relate to the resistance variations thereof with temperature variations, and, or a measured error in these resistance variations from ideal theoretical values. The use of calibration data mapping both voltage and resistance responsiveness to temperature changes enables improved fault detection and the weighting of the thermocouple outputs to be undertaken.

A single data storage device may be provided, the data storage device carrying calibration data associated with all of the thermocouples connected to the distributor. Alternatively, a plurality of data storage devices may be provided, each carrying calibration data associated with an associated one of the thermocouples.

In use, the calibration data from the data storage device(s) may be copied to the associated electronic engine controller (EEC) or the like prior to operation of the engine and used by the EEC during subsequent engine control. Such an arrangement is preferred in systems where the data storage device(s) are located in places where sufficiently high temperatures are experienced during engine operation such that damage to the data storage device(s) would occur or is likely to occur during engine operation.

Such an arrangement is of a branch-like rather than a ladder-like configuration, the branches all being of the same length and substantially identical to one another.

A second plurality of thermocouples connected to a second distributor may be provided, thereby permitting the provision of a dual lane arrangement.

The thermocouples are conveniently constructed from standard materials, for example Nickel-Chromium and Nickel-Aluminium, or alternatively from precious metals, for example platinum.

The data storage device may be provided, in the form of a sacrificial or non-sacrificial memory store.

In its sacrificial form, the calibration data in the data storage device is copied to the EEC prior to the operation of the engine.

In its non-sacrificial form, the data storage device is arranged to be written to by the EEC during the operation of the engine, and used to store, for example, error correction data for the TGT measurement system. Furthermore, in its non-sacrificial form, the data storage device can be used to store data representative, for example, of the cumulated operating life of the TGT measurement system at elevated temperatures. This data could be used, for example, to provide time dependant error correction of TGT measurements and, or, improved scheduling of planned maintenance on the engine turbine module.

The invention will further be described, by way of example, with reference to the accompanying drawings, in which:
Figure 1 illustrates the thermocouple connection layout of a typical ladder arrangement of a TGT measurement system;
Figure 2 is a diagram illustrating a TGT measurement system in accordance with one embodiment of the invention;
Figure 3 is a view similar to Figure 2 illustrating an alternative embodiment of the invention;
Figure 4 is a view similar to Figures 2 and 3 illustrating a further embodiment of the invention (distributed node arrangement); and
Figure 5 illustrates part of a modification to the embodiments illustrated in Figures 2, 3 and 4.

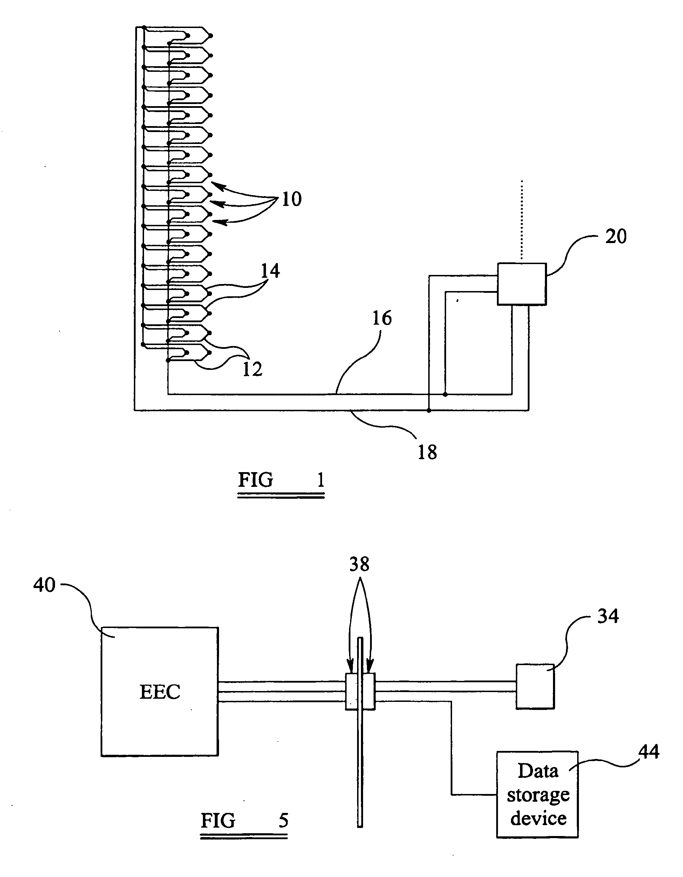

Referring firstly to Figure 1 there is illustrated part of a typical thermocouple layout for a TGT measurement system. The layout comprising a plurality of thermocouples 10, each including a nickel-chromium component 12 and a nickel-aluminium component 14. The nickel-chromium components 12 are all connected together and are connected to an electronic engine controller (EEC) 20 by a connection line 16. Similarly, the nickel aluminium components 14 are interconnnected and connected to the EEC 20 by a connection line 18. The EEC 20 is a dual channel EEC and each connection line 16, 18 is connected to both channels of the EEC 20, so both channels of the EEC receive the same temperature signals.

Although illustrated as located in a straight line adjacent one another, in practise the thermocouples 10 will be arranged in spaced relationship along the circumference of a circle extending around or adjacent the low pressure turbine guide vanes of the engine with which the TGT sensing arrangement is being used.

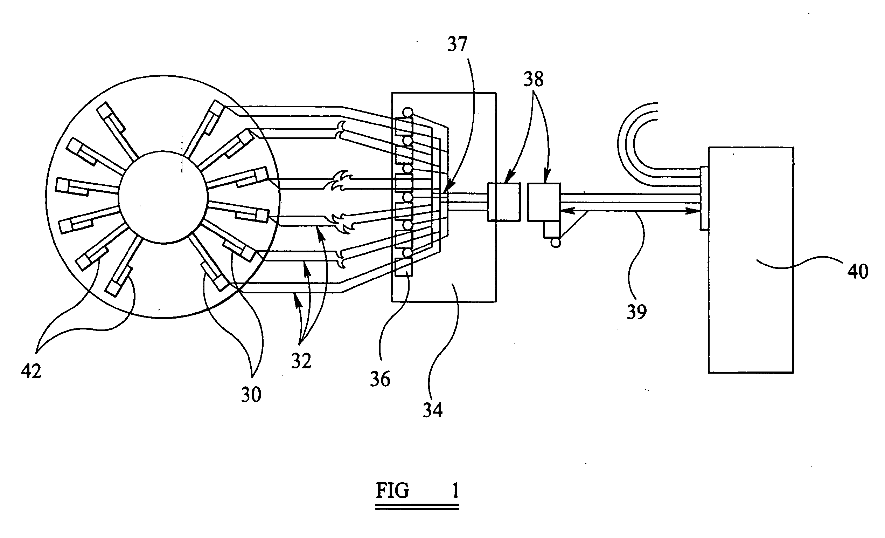

In contrast to the arrangement shown in Figure 1, Figure 2 shows part of a TGT measurement system in accordance with one embodiment of the invention. The arrangement of Figure 2 comprises a first plurality of thermocouples 30 spaced apart around the low pressure turbine guide vanes of an aircraft engine. The thermocouples 30 are each connected, by harnesses 32, to a distributor 34. The harnesses 32 are of substantially the same length as one another with the result that differences between the outputs of the thermocouples 30 are minimised, each thermocouple 30 and associated harness 32 having substantially the same impedance as the other thermocouples 30 and associated harnesses 32.

Within the distributor 34 is located a plurality of non-volatile data storage devices 36 in the form of EEPROMs, each data storage device 36 being associated with a respective one of the thermocouples 30 and its branch harness 32, and being arranged to store calibration data representative of the operation of that one of the thermocouples 30 and its branch harness 32. Each data storage device 36 is programmed with its respective calibration data during a manufacturing, installation or maintenance operation.

The data storage devices 36 can be of either sacrificial or non-sacrificial form, depending upon the maximum internal temperature that this electronic device will be subjected to in-service. If this maximum temperature will not exceed a certain specified level then the data storage devices 36 can be of a non-sacrificial form, which means that as well as storing the calibration data of the TGT measurement system, the data storage devices 36 can also store data that is measured during the operation of the engine, such as error correction data, and use this real time data to further improve the accuracy of the TGT measurement system.

The outputs of the thermocouples 30, branch harnesses 32 and data storage devices 36 are connected via a parallel connection point 37 to a connector device 38, which is connected, in turn, to an EEC 40.

Data is transferred between the data storage devices 36 and the EEC 40 via multi-master I²C serial communications buses 39, which are well known to those skilled in the art. This type of serial bus has a unique address arrangement that enables the EEC 40 to carry out a real time comparison between the TGT measurement system hardware (i.e. the sensors and harnesses) and the associated software (i.e. the EEPROM calibration data) to determine if the hardware is functioning correctly and hence can be used in a TGT measurement calculation.

The EEC 40 is programmed with an algorithm to determine, from the parallel voltage and resistance outputs of the thermocouples 30 and branch harnesses 32, the calibration data, and also any associated error correction data stored in the data storage devices 36 if the data storage device 36 is of non-sacrificial form, the operating turbine inlet temperature relative to a cold junction or node temperature.

A second plurality of thermocouples 42 is also provided, connected via a second, similar distributor (not shown) to a second channel of the EEC 40. This arrangement provides a dual channel, or duplex, TGT measurement system. Schemes for more complex TGT measurement system architectures (i.e. triple channel, or triplex) can also be determined.

Before the TGT measurement system is used in its installed condition, a calibration operation is undertaken, either during manufacture, installation or maintenance of the system, to obtain the calibration data representative of the actual operation of the each of the thermocouples 30, 42. This calibration data being stored in the associated ones of the data storage devices 36. The calibration data preferably maps both the voltage output response, along with a measured error in this voltage output response from an ideal theoretical value, of each thermocouple, and the resistance variation, along with a measured error in this resistance variation from ideal theoretical values, of each thermocouple and the associated harness, to changes in temperature. Upon subsequent connection of the TGT measurement system to the EEC 40 by the connector device 38, the calibration data is downloaded from the data storage devices 36 to the EEC 40 and applied to the control algorithm thereof so that, during subsequent engine operation, TGT measurement can be undertaken accurately, the calibration data being used by the algorithm to reduce the error margin in the measured temperatures, thus avoiding having to rely upon the possible tolerances associated with each of the thermocouples, the associated harnesses and the associated electronics in the EEC 40.

By using calibration data which maps both voltage and resistance responses to temperature changes, the control algorithm of the EEC 40 can be configured as a parallel algorithm that executes both voltage and resistance responses, thereby permitting enhanced error or fault diagnosis, identifying faults or anomalies in the outputs of specific sensors and simplifying subsequent maintenance operations to correct such faults.

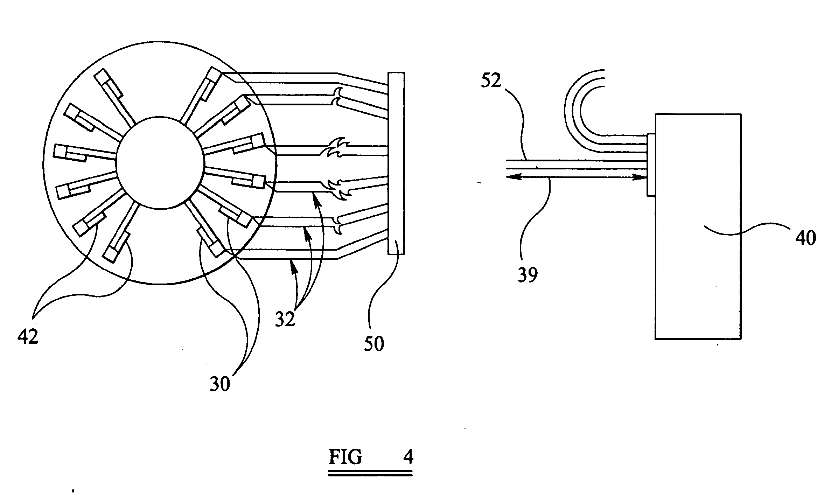

The TGT measurement system incorporates a distributed electronic node 50 as shown in Figure 4. This distributed electronic node 50 would be powered via line 52 from the EEC 40, have its own read, write and processing capability and be in serial communication with the EEC 40 via the serial data bus 39 disclosed hereinbefore. The distributed node 50 provides the TGT measurement system with the capability of measuring each individual sensor and branch harness output, both voltage and resistance responses to temperature variation. When used in conjunction with the aforementioned parallel algorithm processing capability of the EEC 40, this modified TGT measurement system provides an accurate measurement of the circumferential temperature variations around the turbine vanes. This enhanced real time TGT measurement capability provides for improved engine operating efficiency and enhanced engine maintenance capability.

The distributed node 50 could be located close to the branch harnesses 32, as shown in Figure 4, hence reducing the length of the branch harnesses 32 but necessitating the need for the use of high temperature electronics in the distributed node 50. Alternatively, the distributed node 50 could be located close to, or actually integrated with, the EEC 40, which would require the use of longer branch harnesses 32 but negate the need for high temperature electronics.

Where the distributor 34 is located close to the engine and is likely to experience relatively high temperatures during engine operation, for example temperatures exceeding 125°C, there is a risk that the data storage devices 36 will be damaged, and it will be appreciated that in these circumstances the data storage devices 36 may be designed to be sacrificial in the sense that, once the calibration data therefrom has been downloaded to the EEC 40, damage thereto by the engine operating temperature rendering the devices 36 inoperative will not affect the continued operation of the system. In such arrangements, it may be desirable for the data to be stored in a Data Entry Plug (not shown) of the EEC 40. This Data Entry Plug, the operation of which is well known to those skilled in the art, stays with the engine even after the EEC 40 has been replaced.

The EEC 40 will continue to look for operational data storage devices 36 both during engine operational periods, when, for example, a sacrificial data storage device 36 may have been rendered inoperative by the high temperature environment, or following engine maintenance periods, when, for example, a sacrificial data storage device 36 may have been replaced in conjunction with a thermocouple and branch harness set.

The use of a series of harnesses 32 connecting the thermocouples 30 to the distributor 34 results in the thermocouples 30 being arranged in a branch-like configuration rather than a parallel ladder type connection arrangement. This is advantageous in that measurement accuracy can be improved, faults or failures of specific thermocouples may be identified, enhancing the maintenance capability. Furthermore, with the application of a distributed electronic node 50, as described hereinbefore, temperature imbalances can also be identified.

Where faults or failures are identified, the EEC 40 control algorithm may be arranged to place less emphasis on the outputs of the faulty or failed thermocouples. Further, by providing two sets of thermocouples, data can be supplied independently to the two channels or lanes of a dual channel EEC arrangement, which enhances the availability of a robust and accurate TGT measurement system.

Although the thermocouples used in the arrangement described hereinbefore could be of the type using nickel-chromium and nickel-aluminium components, the thermocouples are preferably of the type using precious metals, for example platinum, in their probes. Precious metal probes typically have a smaller output voltage, increased accuracy and lower drift in time compared with nickel-chromium and nickel-aluminium thermocouples. Precious metal probes are unsuitable for use in many typical arrangements without the enhanced data storage and calibration capability of the present invention. Furthermore, low noise electronic input circuits and signal conversion schemes are required in the EEC 40 and distributed electronic node described hereinbefore to ensure that benefit of precious metal probes is realised.

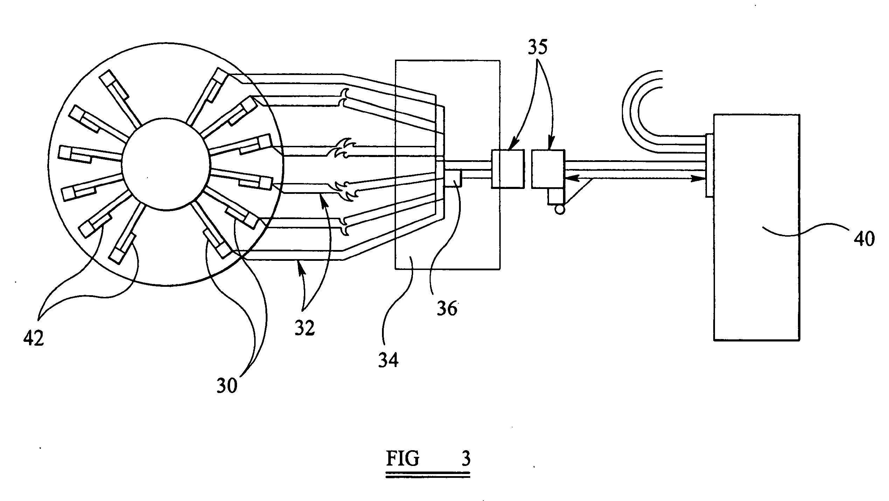

Although Figure 2 illustrates an arrangement in which each thermocouple 30 has its own data storage device 36 associated therewith, this need not be the case and Figure 3 illustrates an arrangement in which each distributor 34 incorporates a single data storage device 36 which is arranged to store calibration data associated with all of the thermocouples 30 connected to that distributor 34. Operation of the arrangement is very similar to that described hereinbefore in relation to Figure 2 and will not be described in further detail.

Figure 5 illustrates a modification which may be made to any of the arrangements described hereinbefore with reference to Figures 2, 3 and 4. In the arrangement of Figure 5, a further data storage device 44 in the form of an EEPROM is provided. The data storage device 44 is conveniently located in a position in which the temperatures experienced during engine operation are not sufficiently high to cause damage thereto.

The data storage device 44 is connected via the connector device 38 to the EEC 40 and is arranged such that data representative of the operation of the engine can be written to the data storage device 44 by the EEC 40. For example, the EEC 40 may be arranged to write to the data storage device 44 data representative of the cumulated operating hours of the engine at which the thermocouples 30 have been exposed to high temperatures. This is advantageous in that, over time, when the thermocouples are exposed to high temperatures, the output or responsiveness of each of the thermocouples 30 to temperature variations will change or drift.

By recording the length of time over which the thermocouples 30 have been at elevated temperatures and supplying this information to the EEC 40, the EEC 40 can make adjustments to take into account the changes in the thermocouple outputs, thereby maintaining the accuracy of the TGT measurement system over the working life thereof By storing this data on a data storage device 44 associated with the TGT measurement system rather than relying upon data stored in the EEC 40, the integrity of the data can be maintained or ensured during maintenance operations which may include the separation of the TGT measurement system from the EEC 40 or reprogramming of the EEC 40, either of which could result in the data stored in the EEC 40 no longer being representative of the actual length of time over which the TGT measurement system has been at elevated temperatures.

If the aforementioned4ata storage device 44 has to be installed in a high temperature region on the engine then this data storage device 44 would have to take the form of a non-sacrificial, high temperature electronics EEPROM device and be incorporated into the TGT measurement system in much the same way as the distributed node arrangement described hereinbefore.

It will be appreciated that a wide range of modifications and alterations may be made to the arrangements described hereinbefore without departing from the scope of the invention as defined by the appended claims.

## Claims

1. A turbine gas measurement system comprising a plurality of thermocouples (30) connected in parallel, each being connected by an associated harness (32), and **characterised by** a distributed electronic node (50) to which each of the thermocouples (30) is connected by the respective harness (32) wherein the distributed electronic node is adapted to measure each individual sensor and corresponding harness output, and at least one data storage device (36) located within the node (50), wherein the harnesses (32) are all of substantially the same length, and wherein calibration data relating to the output response of each of the plurality thermocouples (30) and variations in the associated harness resistance with temperature changes is carried by the data storage device (36).

2. A system according to Claim 1, wherein a single data storage device is provided, the data storage device carrying calibration data associated with all of the thermocouples (30) connected to the node (50).

3. A system according to Claim 1, wherein a plurality of data storage devices (36) is provided, each carrying calibration data associated with an associated one of the thermocouples (30).

4. A system according to any of the preceding claims, wherein a second plurality of thermocouples (42) connected to a second distributed electronic node is provided, thereby permitting the provision of a dual lane arrangement.

5. A system according to any of the preceding claims, wherein the thermocouples (30) are constructed from Nickel-Chromium and Nickel-Aluminium.

6. A system according to any of Claims 1 to 4, wherein the thermocouples (30) incorporate precious metals.

7. A system according to any of the preceding claim, wherein the calibration data relates to the voltage output response of the associated thermocouple (30) to temperature changes, a measured error in the voltage output response from an ideal theoretical value, resistance variations with temperature variations, and/or a measured error in resistance variations from ideal theoretical values.

## Patentansprüche

1. Turbinengas-Messanlage, die mehrere Thermoelemente (30) umfasst, die parallel geschaltet sind, wobei jedes durch einen zugeordneten Kabelbaum (32) angeschlossen ist, und **gekennzeichnet durch** einen verteilten elektronischen Knoten (50), mit dem jedes der Thermoelemente (30) verbunden ist, wobei der verteilte elektronische Knoten dafür eingerichtet ist, die Ausgabe jedes einzelnen Sensors und des entsprechenden Kabelbaumes zu messen, und wenigstens ein Datenspeichergerät (36), das innerhalb des Knotens (50) angeordnet ist, wobei die Kabelbäume (32) alle im Wesentlichen die gleiche Länge haben und wobei Kalibrierungsdaten bezüglich der Ausgabereaktion jedes der mehreren Thermoelemente (30) und Variationen bei dem Widerstand des zugeordneten Kabelbaums bei Temperaturveränderungen **durch** das Datenspeichergerät (36) geführt werden.

2. Anlage nach Anspruch 1, wobei ein einziges Datenspeichergerät bereitgestellt wird, das die Kalibrierungsdaten führt, die mit allen der mit dem Knoten (50) verbundenen Thermoelemente (30) verknüpft sind.

3. Anlage nach Anspruch 1, wobei mehrere Datenspeichergeräte (36) bereitgestellt werden, wobei jedes die Kalibrierungsdaten führt, die mit einem zugeordneten der Thermoelemente (30) verknüpft sind.

4. Anlage nach einem der vorhergehenden Ansprüche, wobei eine zweite Vielzahl von Thermoelementen (42) bereitgestellt wird, die mit einem zweiten verteilten elektronischen Knoten verbunden sind, wodurch das Bereitstellen einer Doppelstrang-Anordnung ermöglicht wird.

5. Anlage nach einem der vorhergehenden Ansprüche, wobei die Thermoelemente (30) aus Nickel-Chrom und Nickel-Aluminium aufgebaut sind.

6. Anlage nach einem der Ansprüche 1 bis 4, wobei die Thermoelemente (30) Edelmetalle einschließen.

7. Anlage nach einem der vorhergehenden Ansprüche, wobei sich die Kalibrierungsdaten auf die Spannungsausgabereaktion des zugeordneten Thermoelementes (30) auf Temperaturveränderungen, einen gemessenen Fehler bei der Spannungsausgabereaktion gegenüber einem idealen theoretischen Wert, Widerstandsvariationen bei Temperaturvariationen und/oder einen gemessenen Fehler bei Widerstandsvariationen gegenüber idealen theoretischen Werten beziehen.

## Revendications

1. Système de mesure de gaz de turbine comprenant une pluralité de thermocouples (30) connectés en parallèle, chacun étant connecté par un faisceau de câbles associé (32), et **caractérisé par** un noeud électronique réparti (50) auquel chacun des thermocouples (30) est connecté par le faisceau de câbles respectif (32), dans lequel le noeud électronique réparti est adapté pour mesurer la sortie de chaque capteur individuel et du faisceau de câbles associé, et au moins un dispositif de stockage de données (36) situé à l'intérieur du noeud (50), dans lequel les faisceaux de câbles (32) ont tous sensiblement la même longueur et dans lequel des données d'étalonnage relatives à la réponse en sortie de chaque thermocouple de la pluralité de thermocouples (30) et des variations de la résistance du faisceau de câbles associé en fonction des variations de température sont supportées par le dispositif de stockage de données (36).

2. Système selon la revendication 1, dans lequel un seul dispositif de stockage de données est prévu, le dispositif de stockage de données supportant des données d'étalonnage associées à tous les thermocouples (30) connectés au noeud (50).

3. Système selon la revendication 1, dans lequel une pluralité de dispositifs de stockage de données (36) est prévue, chaque dispositif supportant des données d'étalonnage associées à un thermocouple associé parmi les thermocouples (30).

4. Système selon l'une quelconque des revendications précédentes, dans lequel une seconde pluralité de thermocouples (42) connectés à un second noeud électronique réparti est prévue, permettant ainsi de fournir un dispositif à double voie.

5. Système selon l'une quelconque des revendications précédentes, dans lequel les thermocouples (30) sont fabriqués en nickel-chrome et nickel-aluminium.

6. Système selon l'une quelconque des revendications 1 à 4, dans lequel les thermocouples (30) incorporent des métaux précieux.

7. Système selon l'une quelconque des revendications précédentes, dans lequel les données d'étalonnage concernent la réponse en tension de sortie du thermocouple associé (30) vis-à-vis des variations de température, une erreur mesurée dans la réponse en tension de sortie par rapport à une valeur théorique idéale, des variations de la résistance en fonction des variations de température et/ou une erreur mesurée dans les variations de la résistance par rapport à des valeurs théoriques idéales.
